# EUROPEAN PATENT SPECIFICATION

(11) **EP 4 454 937 B1**
(45) Date of publication and mention of the grant of the patent: **02.09.2026**
(21) Application number: 24170446.9
(22) Date of filing: 16.04.2024
(51) Int. Cl.: B60L 58/26, H01M 50/141, H01M 10/613, H01M 10/625, H01M 10/633, H01M 10/663, B60H 1/00, B60H 3/02, B60H 1/32, B60L 50/64

(54) **SUSPENSION ATTACHMENT STRUCTURE FOR A MOTOR VEHICLE AND FRAME ASSEMBLY FOR A MOTOR VEHICLE**
AUFHÄNGUNGSBEFESTIGUNGSSTRUKTUR FÜR EIN KRAFTFAHRZEUG UND RAHMENANORDNUNG FÜR EIN KRAFTFAHRZEUG
STRUCTURE DE FIXATION DE SUSPENSION POUR UN VÉHICULE AUTOMOBILE ET ENSEMBLE DE CHÂSSIS POUR UN VÉHICULE AUTOMOBILE

(30) Priority: 21.04.2023 IT 202300007899; 21.04.2023 IT 202300007914
(43) Date of publication of application: 30.10.2024
(73) Proprietor: FERRARI S.p.A., 41100 Modena (IT)
(72) Inventor: FAVARETTO, Fabrizio, 41100 MODENA (IT)
(74) Representative: Studio Torta S.p.A.

(56) References cited:
- EP-A1- 0 868 338
- EP-B1- 0 868 338
- DE-A1- 102015 105 601
- DE-A1- 19 931 731
- DE-A1- 4 032 433

## Description

### CROSS-REFERENCE TO RELATED APPLICATIONS

This patent application claims priority from Italian patent application no. 102023000007899 filed on April 21, 2023 and of Italian Patent Application No. 102023000007914 filed on April 21, 2023.

### TECHNICAL FIELD

The invention concerns a suspension attachment structure for a motor vehicle. The invention also relates to a frame assembly for a motor vehicle comprising a suspension attachment structure and a motor vehicle.

### BACKGROUND

Motor vehicles comprising systems for heating, ventilation, and air conditioning are well known. These systems, also called "HVAC" (Heating, Ventilation, and Air Conditioning), enable the adjustment, for example, of the temperature and humidity inside the passenger compartment of motor vehicles, in order to improve the occupants' comfort.

HVAC systems comprise multiple components, pipes, and apparatuses implemented to subject a process fluid to a thermodynamic cycle, for example a refrigeration cycle.

The overall weight of HVAC systems significantly influences the weight of known motor vehicles and, therefore, contributes, at least indirectly, to the quantity of polluting substances emitted by the motor vehicles.

In light of the above, there is a need to improve known motor vehicles, in order to reduce their weight, while maintaining a high level of comfort for occupants inside passenger compartments.

One purpose of the invention is to respond to the need described above, preferably in a simple and reliable way.

DE4032433A1 discloses an axle support beam of a motor vehicle having internal passageways through which the lubricating oil or the hydraulic fluid is circulated. The external surface of the support beam is provided with fins so that the support beam functions as an oil cooler or hydraulic fluid cooler. The engine lubricating oil or the hydraulic fluid is thus cooled by the flow of air over the axle support resulting from the forward motion of the vehicle. The interior of the support beam is divided into two compartments to provide separate circuits for the oil and for the hydraulic fluid.

### DESCRIPTION OF THE INVENTION

The purpose is achieved with a suspension attachment structure for a motor vehicle as defined in claim 1. The dependent claims define particular embodiments of the invention.

### BRIEF DESCRIPTION OF THE DRAWINGS

Below, three embodiments of the invention are described to better understand it by way of non-limiting example and with reference to the attached drawings in which:
- Figure 1 is a perspective view of a motor vehicle comprising a suspension attachment structure according to a first embodiment of this invention;
- Figure 2 is a perspective view of a frame assembly of the motor vehicle in Figure 1 comprising the suspension attachment structure with parts removed for clarity;
- Figure 2A is a front view on an enlarged scale of a portion of the motor vehicle in Figure 1;
- Figure 3 is a perspective view of the suspension attachment structure in Figures 1, 2, and 2A;
- Figure 3A is a cross-section according to plane III-III in Figure 3;
- Figure 4 is a perspective view of a frame assembly comprising a suspension attachment structure according to a second embodiment of this invention with parts removed for clarity;
- Figure 5 is a perspective view on an enlarged scale of a portion of the frame assembly in Figure 4;
- Figure 5A is a detail on a further enlarged scale of the portion of the frame assembly illustrated in Figure 5;
- Figure 6 is a perspective view of a frame assembly comprising a suspension attachment structure according to a third embodiment of this invention with parts removed for clarity;
- Figure 7 is a perspective view on an enlarged scale of a portion of the frame assembly in Figure 6; and
- Figure 7A is a detail on a further enlarged scale of the portion of the frame assembly illustrated in Figure 7.

### EMBODIMENTS OF THE INVENTION

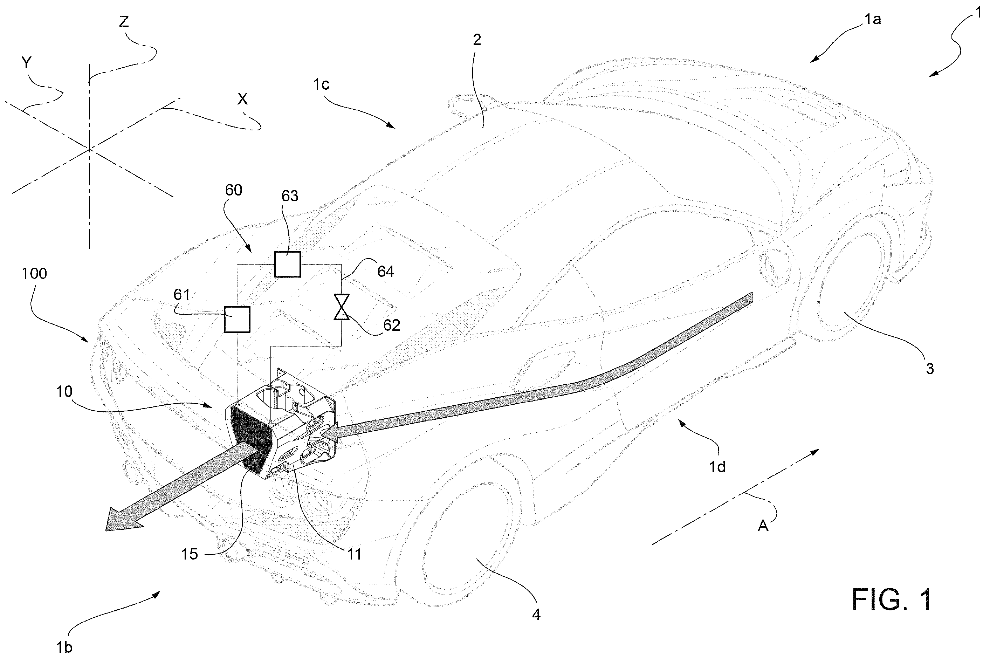

In Figure 1, the reference number 1 is used to indicate, as a whole, a motor vehicle comprising:
- a frame 2,
- a passenger compartment for housing at least one driver and, potentially, one or more passengers, which is fixed in relation to the frame 2;
- a plurality of wheels 3, 4 rotatable about respective rotational axes to move the frame 2 with respect to the ground; and
- a plurality of suspensions adapted couple the wheels 3, 4 to the frame 2 at relative distances variable along a direction Z of the vehicle 1, in use, vertical with respect to the ground.

The motor vehicle 1 also comprises drive means - not illustrated - adapted to rotate the wheels 3, 4 around the respective rotation axes. For example, the drive means comprise one or more electric motors each arranged at a respective wheel 3, 4.

The vehicle 1 also comprises a front portion 1a and a back portion 1b along a forward direction A of the vehicle 1. The vehicle 1 also defines a longitudinal direction X in relation to which the front portion 1a and the back portion 1b are opposite each other.

It is possible to distinguish between a pair of front wheels 3 arranged at the front portion 1a and a pair of back wheels 4 arranged at the back portion 1b. The suspensions also comprise front suspensions adapted to couple the front wheels 3 to the frame 2 and back suspensions adapted to couple the back wheels 4 to the frame 2.

Considering a midplane of the vehicle 1 parallel to the longitudinal direction X, it is also possible to identify a left portion 1c and a right portion 1d of the vehicle 1 in relation to the forward direction A. More specifically, of the two back wheels 4, one is arranged at the left portion 1c and the other is arranged at the right portion 1d. In addition, the back suspensions comprise a left suspension and a right suspension adapted to couple the back wheels 4 to the frame 2 placed, respectively, at the left portion 1c and the right portion 1d.

The vehicle 1 also comprises an HVAC system 60 - only schematically illustrated in Figure 1 - for heating, ventilation and/or air conditioning (for example, of the passenger compartment). Specifically, the HVAC system 60 is a system for conditioning the passenger compartment of the vehicle 1 and basically comprises a compressor 61, a condenser, an expansion valve 62, an evaporator 63, and one or more pipes 64, which fluidically connect the above-mentioned components to each other and inside of which a fluid flows that undergoes a refrigeration cycle. For example, the fluid is a Freon.

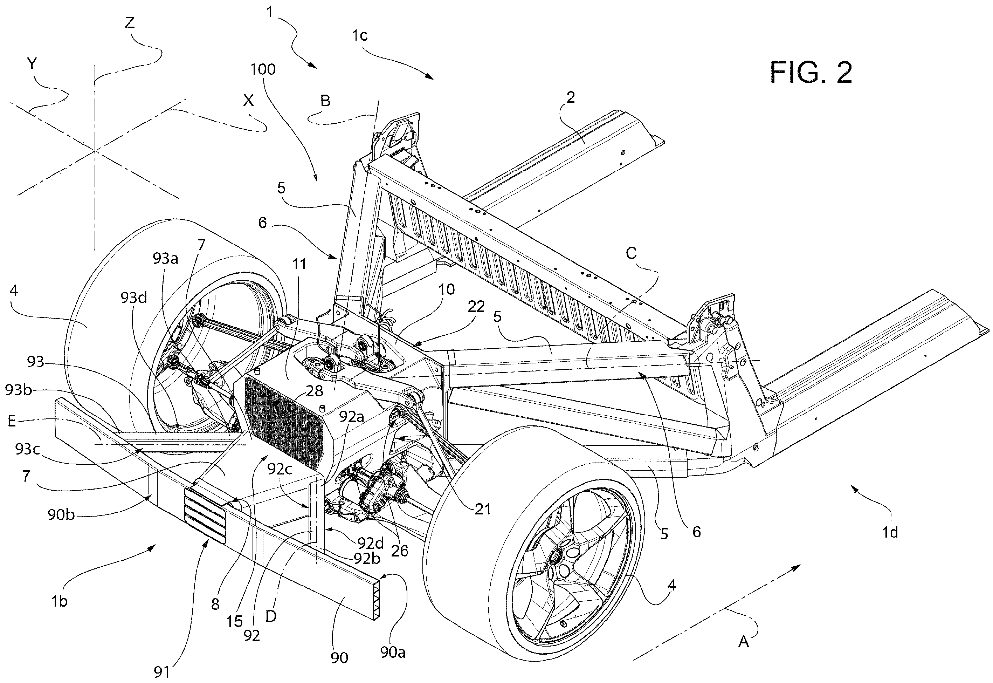

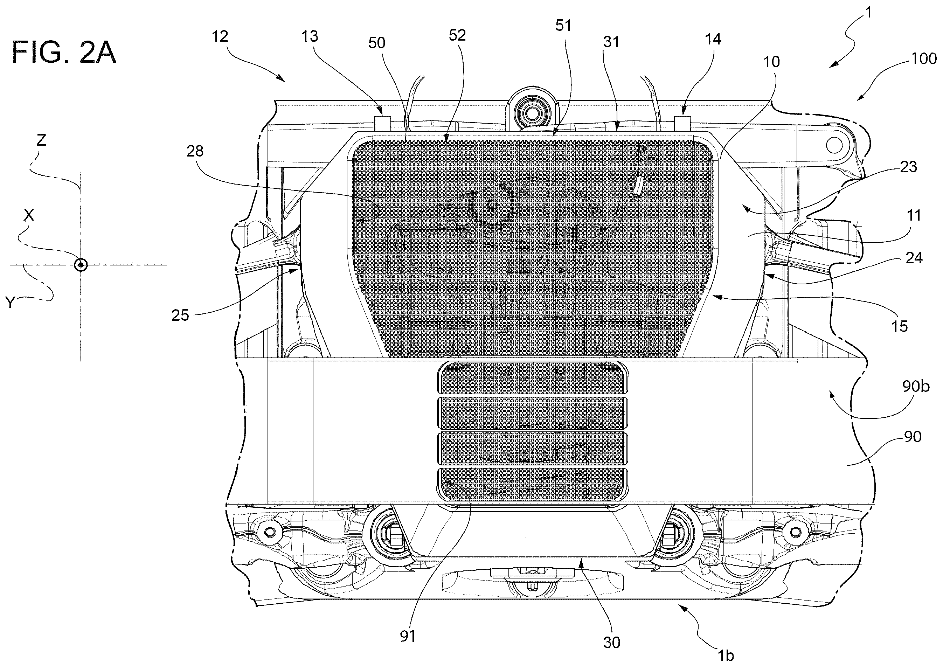

As illustrated in Figure 2, the frame 2 comprises two spars 5 arranged transversely to the direction X. Specifically, one of the two spars 5 is arranged at the left portion 1c and the other is arranged at the right portion 1d.

In the embodiment illustrated, the spars 5 are parallelepiped-shaped bodies extending mainly along respective directions B and C incident to one another and transversal to the direction X. In addition, the spars 5 are preferably identical to each other and are made of metal. In addition, the spars 5 are arranged symmetrically to the midplane of the vehicle 1 parallel to the longitudinal direction X.

Each spar 5 comprises a respective flat surface 6 on the opposite side to the other of the two spars 5. The flat surfaces 6 of the two spars 5 converge towards the back portion 1b.

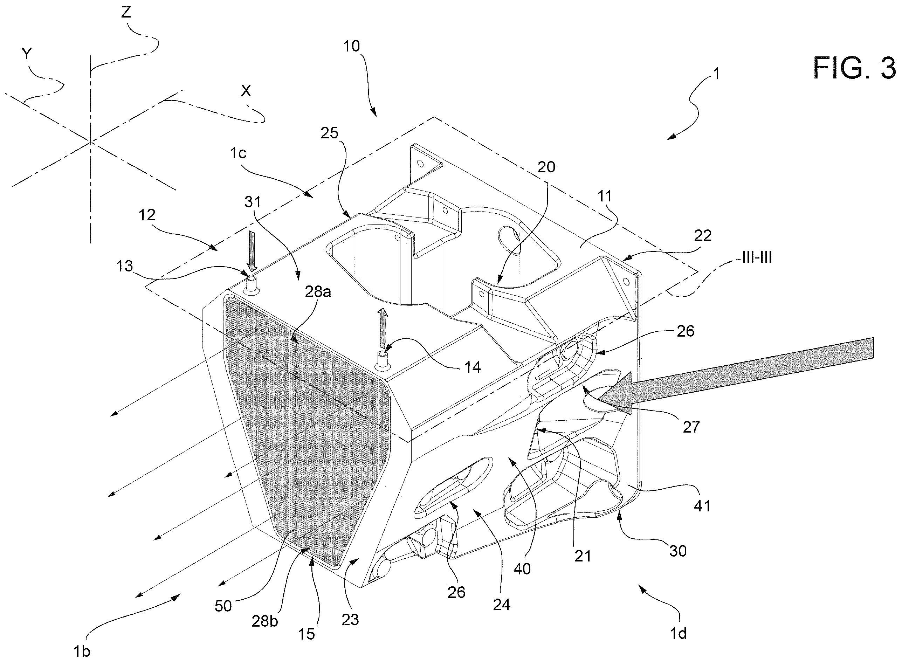

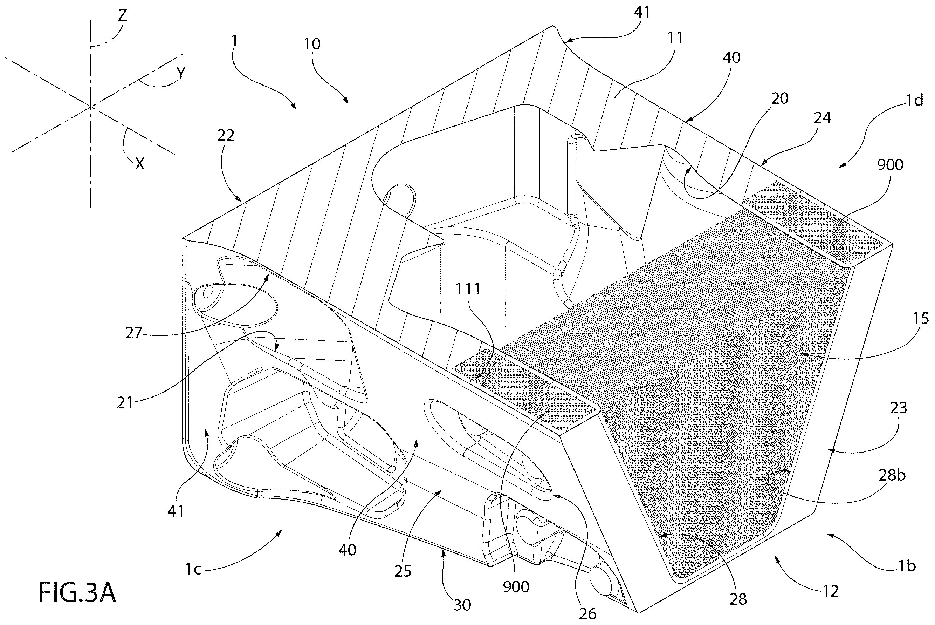

The vehicle 1 also comprises a suspension attachment structure 10 comprising (Figure 3):
- a main body 11 fixed to the frame 2 and adapted to support one or more suspensions; and
- a fluidic path 12 crossed internally by a fluid.

The fluidic path 12 comprises, in turn:
- an opening 13 for the inlet of the fluid;
- an opening 14 for the outlet of the fluid; and
- a heat exchange portion 15 fluidically interposed between the openings 13 and 14, supported by the main body 11 and adapted to be struck by an air flow.

Specifically, the heat exchange portion 15 comprises multiple passages 50, which each fluidically connect opening 13 to opening 14. More specifically, each passage 50 defines a cavity inside of which the fluid flows; the surfaces that define each passage 50, in addition, are impinged on the outside by the air flow. In detail, the passages 50 define with one another a plurality of interstices 52 adapted to enable the passage of the air flow (Figure 2A).

The air flow is due to the relative motion between the vehicle 1 and the atmospheric air in which it is immersed and is adapted to remove heat from the fluid that crosses the heat exchange portion 15. As a result of this heat exchange, the structure 10 acts as a heat exchanger.

Specifically, the structure 10 is a heat exchanger of the HVAC system 60, the fluid that crosses the fluidic path 12 is the same fluid that crosses the other components of the HVAC system 60, and the fluidic path 12 is part of the pipes 64. More specifically, the structure 10 is a condenser of the HVAC system 60.

As illustrated in Figure 1, the structure 10 is arranged at the back portion 1b. In particular, the structure 10 is interposed between the two back wheels 4 along a direction Y orthogonal to the directions X and Z.

The main body 11 is adapted to support both the right and left suspensions of the back suspensions. To this end, the main body 11 comprises multiple attachment elements 26 configured to enable the coupling of the suspensions to the main body 11 (Figure 3).

The main body 11 is box shaped and comprises (Figure 3):
- a compartment 20 adapted to house one or more components of the vehicle 1; and
- two openings 21 adapted to allow an air flow to flow into the compartment 20.

Specifically, the heat exchange portion 15 faces the compartment 20 and/or contributes to defining the compartment 20.

The main body 11 also comprises:
- a wall 22, at which the structure 10 is fixed to the frame 2;
- a wall 23 opposite wall 22 along the direction X, at which the heat exchange portion 15 is arranged; and
- two lateral walls 24, 25 extending between wall 22 and wall 23 along the direction X.

As illustrated in Figure 2, the wall 22 is fixed to each of the two spars 5. Specifically, the surfaces 6 are adapted to guide the air flow towards the structure 10 and the heat exchange portion 15.

In addition, the lateral wall 24 extends on the side of the right portion 1d of the vehicle 1 and the lateral wall 25 extends on the side of the left portion 1c. Each lateral wall 24, 25 comprises, in addition, a respective opening 21.

Each opening 21 has a rectangular or substantially rectangular shape on a plane parallel to the directions X and Z and comprises a surface 27 extending transversal to the longitudinal direction X and adapted to guide and make the air flow converge towards the heat exchange portion 15. In addition, the surfaces 27 of the two openings 21 are symmetrical to each other in relation to a midplane of the main body 11 parallel to the directions X and Z.

Specifically, the main body 11 comprises the attachment elements 26 at both the lateral walls 24 and 25.

As illustrated in Figure 3, the wall 22 is flat and perpendicular to the longitudinal direction X; the wall 23 is also flat and parallel to the wall 22.

The wall 23 comprises, in turn, an opening 28 directed parallel to the direction X and at which the heat exchange portion 15 is housed. Specifically, the heat exchange portion 15 directly faces the opening 28.

In the embodiment illustrated, a cross-section of the opening 28 on a plane perpendicular to the direction X comprises a rectangular-shaped region 28a and a trapezoidal-shaped region 28b joined together. The regions 28a and 28b are arranged in succession parallel to the direction Z (Figure 3).

In addition, the main body 11 has a tapered shape proceeding from the wall 22 to the wall 23 along the direction X. In detail, each lateral wall 24, 25 comprises:
- a flat region 40 extending along the direction X between the respective opening 21 and the wall 23; and
- a region 41 extending along the direction X between the wall 22 and the respective opening 21 and joining the wall 22 to the flat region 40.

More specifically, each flat region 40 is perpendicular or substantially perpendicular to the wall 23; each region 41 is curved and contributes to guiding the air flow towards the respective opening 21.

The main body 11 also comprises:
- a wall 30 with an orthogonal base or substantially orthogonal base to the direction Z; and
- a wall 31 opposite the wall 30 along the direction Z and parallel to the wall 30.

In the embodiment illustrated, the walls 30 and 31 are flat. In addition, the openings 13 and 14 are arranged at the wall 31.

In detail, the fluidic path 12 comprises a first section - not illustrated - that extends between the opening 13 and the heat exchange portion 15 inside the main body 11 and a second section - also not illustrated - that extends between the heat exchange portion 15 and the opening 14. The first and the second section are respective hollow portions of the main body 11 extending at the wall 23.

The heat exchange portion 15 comprises a lattice structure 51 comprising structural elements (for example, truss elements) repeated and defining the passages 50 for the fluid and the interstices 52 between the above-mentioned passages 50. Specifically, the interstices 52 are formed between the outer surfaces of the passages 50 and are adapted to enable the passage of the air flow from the compartment 20 through the opening 28.

The lattice structure 51 extends parallel to the direction X starting from the wall 23 towards the wall 22.

The lattice structure 51 could comprise, in addition, one or more surfaces with fins.

In detail, the lattice structure 51 is made using additive manufacturing, for example using selective laser melting of metal powders.

The passages 50 preferably comprise heat exchange surfaces between the fluid and the air in the form of gyroids. In addition, the fluid inside the passages 50 is fluidically insulated from the air.

In addition, the structure 10 is preferably made of aluminium alloy.

The frame 2 comprises, in addition, a strut 7 adapted to absorb the longitudinal shocks of the vehicle 1, i.e. parallel to the direction X. The strut 7 is arranged symmetrically in relation to the midplane of the vehicle 1 parallel to the direction X (Figure 2).

Specifically, the strut 7 is fixed to the structure 10 on the side of the surface 23 and comprises an opening 8 at least partially overlapping the opening 28. The opening 8 is a through opening parallel to the direction X and is adapted to enable the passage of air that impinged the heat exchange portion 15. In more detail, the strut 7 is made of aluminium and/or a composite material.

The extension of the opening 8 orthogonally to the longitudinal direction X preferably decreases gradually along the longitudinal direction X in the direction oriented from the front portion 1a to the back portion 1b. In other words, the opening 8 acts as a nozzle for the air flow coming out of the opening 28.

In the embodiment illustrated, the strut 7 has a trapezoidal shape on a plane orthogonal to the direction Z.

The frame 2 also comprises a crossbeam 90 opposite the front portion 1a with respect to the structure 10 along the longitudinal direction X. The crossbeam 90 extends parallel or substantially parallel to the direction Y and is fixed to the strut 7 on the side of the opening 8.

The crossbeam 90 comprises, in turn, an opening 91, adapted to enable the passage of the air that has impinged the heat exchange portion 15 and that crossed the opening 8. The opening 91 is at least partially aligned with the opening 8 parallel to the direction Y. In addition, the opening 91 is preferably arranged at the midplane of the crossbeam 90 parallel to the direction Y.

In the embodiment illustrated, the opening 91 has a rectangular shape.

The crossbeam 90 also comprises a face 90a turned towards the side of the front portion 1a and, thus, facing the structure 10 and a face 90b turned towards the side of the back portion 1b.

The frame 2 also comprises two spars 92, 93 that extend along respective directions D and E incident to each other and transversal to the direction X. Specifically, the spars 92 and 93 have a constant orthogonal cross-section along the respective directions D and E. More specifically, the spars 92 and 93 have an orthogonal cross-section that is rectangular. In addition, the spars 92, 93 are preferably identical to each other.

The spar 92 comprises two ends 92a, 92b opposite to each other along the direction D; end 92a is fixed to the strut 7 and end 92b is fixed to the crossbeam 90. Similarly, the spar 93 comprises two ends 93a, 93b opposite to each other along the direction E; end 93a is fixed to the strut 7 and end 93b is fixed to the crossbeam 90. More specifically, the ends 92b and 93b are fixed to the crossbeam 90 on the side of the face 90a (Figure 2).

The spars 92, 93 are arranged symmetrically in relation to the strut 7. In addition, the distance between the ends 92a and 93a parallel to the direction Y is less than the distances between the ends 92b and 93b parallel to the direction Y.

More specifically, the spar 92 comprises a face 92c facing the spar 93 and a face 92d opposite the face 92c; the spar 93 comprises a face 93c facing the spar 92 and a face 93d opposite the face 93c.

The structure 10, the strut 7, and the spars 92, 93 define a frame assembly 100 of the vehicle 1, in particular a back frame assembly, i.e. arranged at the back portion 1b.

Advantageously, structure 10 comprises thermal insulation means 900 adapted to limit heat transfer between heat exchange portion 15 and main body 11 (Figure 3A).

In detail, thermal insulation means 900 are integrated into main body 11. In further detail, the insulation means 900 are made in a thermal insulating material, e.g. rubber and are arranged close to opening 28 at the same region of main body 11 along which heat exchange portion 15 extends.

As shown in Figure 3A, insulation means 900 are parallelepiped shaped and have an extension equal or greater than the extension of heat exchange portion 15 along direction X. Furthermore, insulation means 900 extend both on the side of lateral wall 24, and on the side of lateral wall 25.

In greater detail, main body 11 comprises a cavity 111, wherein the thermal insulation means 900 are housed.

Alternatively or in addition, insulation means 900 are in contact with main body 11 and outside main body 11.

In use, the structure 10 supports the back suspensions, absorbing the stresses to which they are subject, and the strut 7 and the spars 92, 93 absorb the longitudinal shocks of the vehicle 1.

When the HVAC system 60 is activated, the fluid circulates through the components of the system, undergoing a refrigeration cycle. More specifically, when the fluid reaches the structure 10, it enters from the opening 13, crosses the first section, the heat exchange portion 15, the second section, and flows out from the opening 14.

At the same time, the air flow is guided by the spars 5, penetrates the compartment 20 through the openings 21, hits the heat exchange portion 15, and flows out from the compartment 20 through the opening 28. In particular, the air flow flows through the interstices 52 of the lattice structure 51 and flows out in succession through the openings 28, 8, and 91 in a direction parallel or substantially parallel to the axis X.

More specifically, when crossing the heat exchange portion 15, the fluid flows through the passages 50 and part of its heat is absorbed by the air flow hitting it. When crossing the passages 50, the fluid preferably passes from the gaseous state to the liquid state.

During operation, thermal insulation means 900 limit heat transfer between heat exchange portion 15 and main body 11.

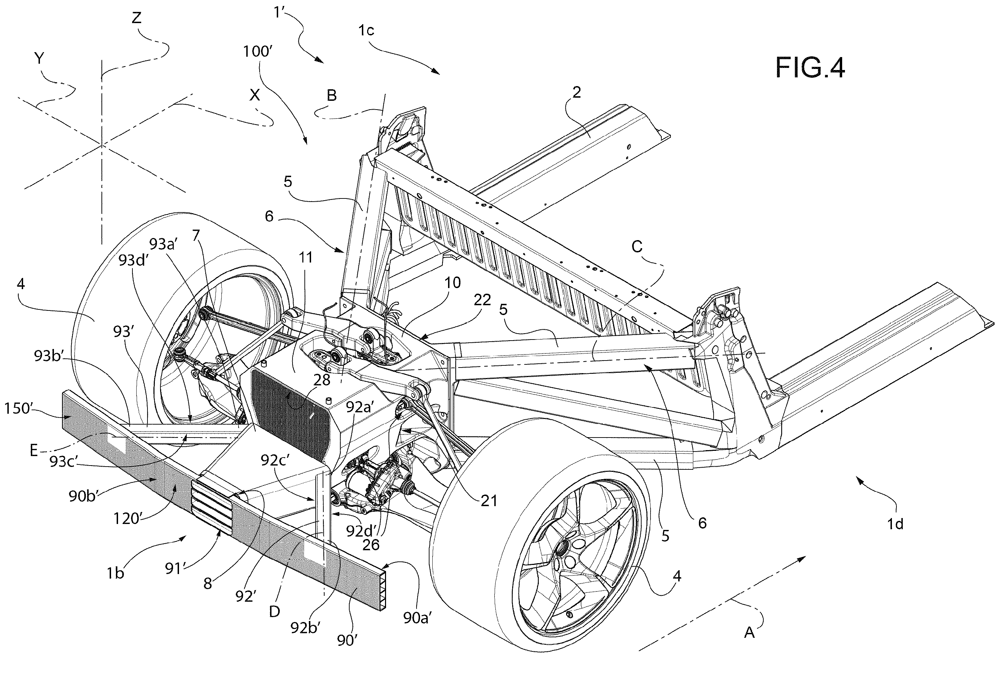

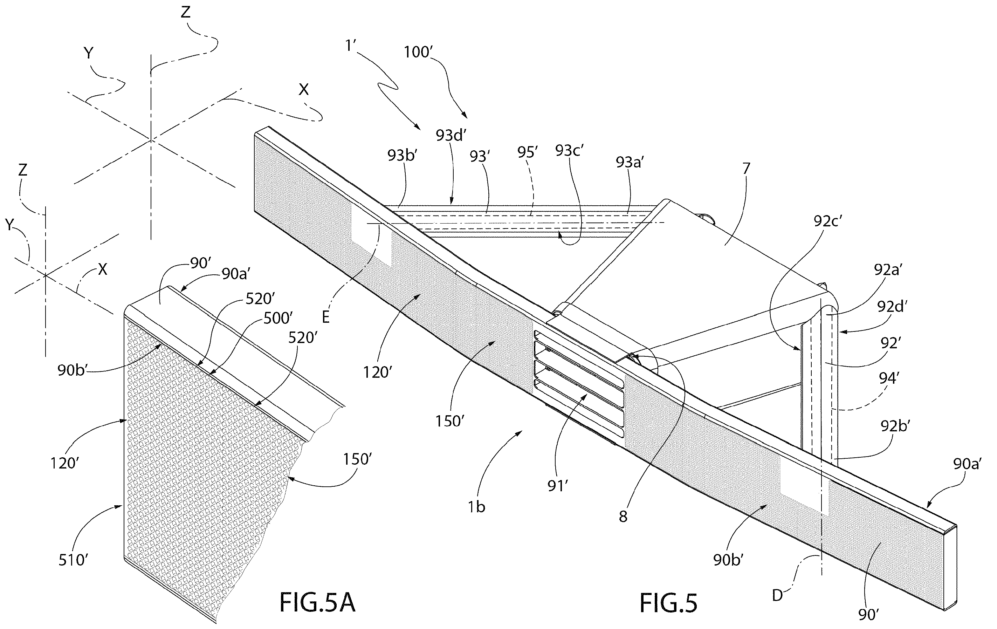

With reference to Figures 4, 5 and 5A, reference number 100' indicates a frame assembly according to a second embodiment of the invention. The frame assembly 100' is similar to the frame assembly 100 and will be described below only as far as it differs from the latter; the same or equivalent parts of the frame assemblies 100; 100' will be distinguished, where possible, by the same reference numbers. The frame assembly 100' differs from the frame assembly 100 due to it comprising a crossbeam 90' that comprises, in turn, a fluidic path 120' adapted to be crossed internally by a fluid.

The fluidic path 120' of the crossbeam 90' is fluidically connected to the fluidic path 12 of the structure 10 and the fluid that crosses the fluidic path 120' is the same fluid that crosses the fluidic path 12.

In detail, the spars 92' and 93' each comprise one or several pipes 94', 95' (only schematically illustrated in Figure 5) that fluidically connect the fluidic path 120' to the fluidic path 12. In the embodiment illustrated, the pipes 94', 95' each comprise a tubular element for the passage of fluid between the fluidic path 120' and the fluidic path 12.

The fluidic path 120' comprises an inlet and an outlet (not illustrated) for the fluid and a heat exchange portion 150' fluidically interposed between the inlet and the outlet for the fluid and adapted to be hit by an air flow.

In the embodiment illustrated, the pipe 94' fluidically connects the fluidic path 12 to the inlet for the fluid of the fluidic path 120' and the pipe 95' fluidically connects the outlet for the fluid of the fluidic path 120' to the fluidic path 12.

Specifically, the heat exchange portion 150' comprises multiple passages 500', which each fluidically connect the inlet to the outlet for the fluid. More specifically, each passage 500' defines a cavity inside of which the fluid flows; the surfaces that define each passage 500', in addition, are impinged on the outside by the air flow. In addition, the passages 500' define with one another a plurality of interstices 520' adapted to enable the passage of the air flow (Figure 5A).

In the embodiment illustrated in Figure 5A, the interstices 520' are at least partially directed parallel to the direction X.

The air flow is due to the relative motion between the vehicle 1' and the atmospheric air in which it is immersed and is adapted to remove heat from the fluid that crosses the heat exchange portion 120'. As a result of this heat exchange, the crossbeam 90' acts as a heat exchanger.

Specifically, the crossbeam 90' forms, together with the structure 10, a heat exchanger of the HVAC system 60; the fluid that crosses the fluidic paths 12 and 120' is the same fluid that crosses the other components of the HVAC system 60 and the fluidic paths 12 and 120' are part of the pipes 64. More specifically, the crossbeam 90' and the structure 10 constitute a condenser of the HVAC system 60. For example, the crossbeam 90' and the structure 10 are arranged in series or in parallel in the HVAC system 60.

The heat exchange portion 150' comprises a lattice structure 510' comprising structural elements (for example, truss elements) repeated and defining the passages 500' for the fluid and the interstices 520' between the above-mentioned passages 500'. Specifically, the interstices 520' are formed between the outer surfaces of the passages 500' and are adapted to enable the passage of the air flow from the face 90a' towards the face 90b' (Figure 5A).

The lattice structure 510' preferably extends parallel to the direction X between the wall 90a' and the wall 90b'.

The lattice structure 510' could comprise, in addition, one or more surfaces with fins.

In detail, the lattice structure 510' is made using additive manufacturing, for example using selective laser melting of metal powders.

The passages 500' preferably comprise heat exchange surfaces between the fluid and the air in the form of gyroids. In addition, the fluid inside the passages 500' is fluidically insulated from the air.

In addition, the crossbeam 90' is preferably made of aluminium alloy.

The operation of the frame assembly 100' is similar to the operation of the frame assembly 100 and is described below only as far as it differs from the latter.

In use, when the HVAC system 60 is activated, the fluid circulates through the components of the system, undergoing a refrigeration cycle. Specifically, when the fluid reaches the structure 10, part of the fluid crosses the fluidic path 12 and part of the fluid flows towards the fluidic path 120' . More specifically, the fluid reaches the inlet for the fluid of the fluidic path 120' through the pipe 94', crosses the heat exchange portion 150', passes through the outlet for the fluid of the fluidic path 120' then runs along the pipe 95' towards the structure 10.

At the same time, an air flow hits the heat exchange portion 150' in the direction oriented by the face 90a' to the face 90b'. In particular, this air flow flows through the interstices 520' of the lattice structure 510'.

More specifically, when crossing the heat exchange portion 150', the fluid flows through the passages 500' and part of its heat is absorbed by the air flow hitting it.

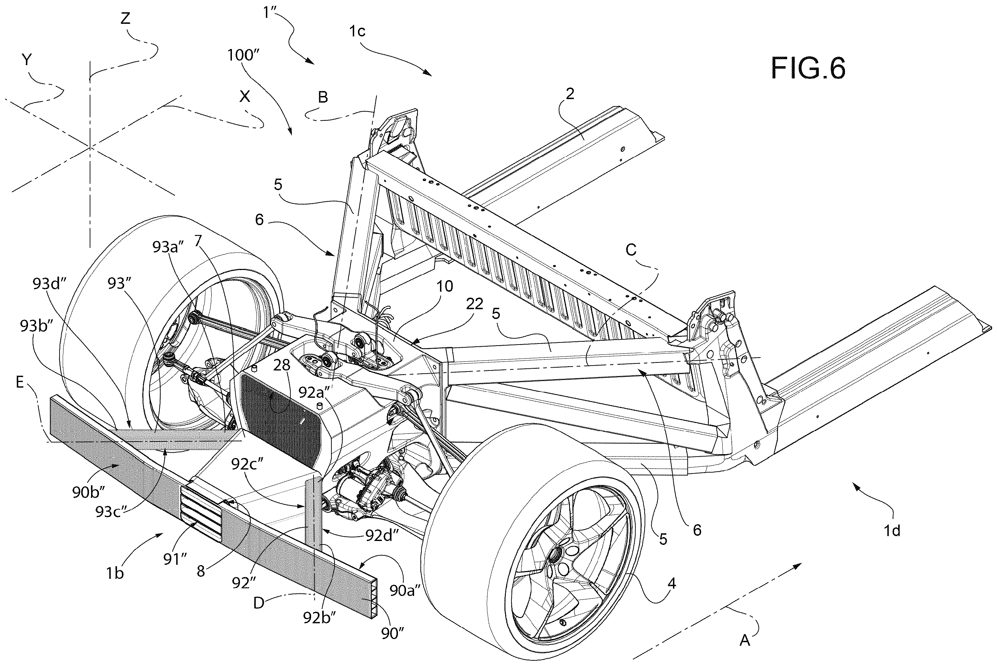

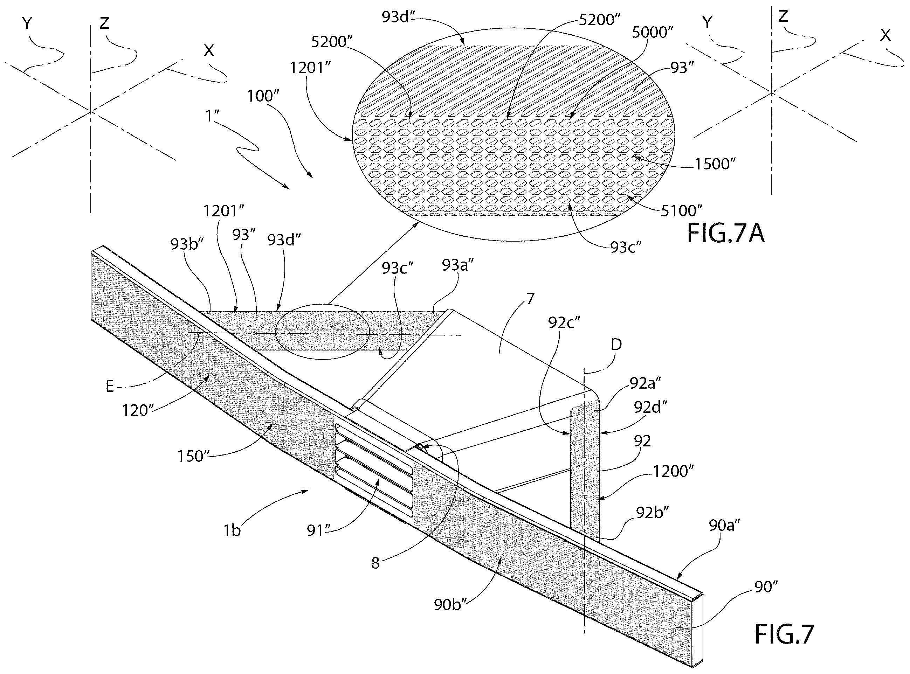

With reference to Figures 6, 7 and 7A, reference number 100' indicates a frame assembly according to a third embodiment of the invention. The frame assembly 100'' is similar to the frame assembly 100' and will be described below only as far as it differs from the latter; the same or equivalent parts of the frame assembly 100'; 100'' will be distinguished, where possible, by the same reference numbers. The frame assembly 100'' differs from the frame assembly 100' in that the spars 92'' and 93'' comprise respective fluidic paths 1200'', 1201'' suitable for being crossed internally by a fluid and each comprising:
- an inlet and an outlet for the fluid; and
- a heat exchange portion 1500'' fluidically interposed between the inlet and the outlet for the fluid and adapted to be struck by an air flow.

The fluidic paths 1200'' and 1201'' are fluidically connected to the fluidic path 12 of the structure 10 and to the fluidic path 120'' of the crossbeam 90'' and the fluid that crosses the fluidic paths 1200'', 1201'' is the same fluid that crosses the fluidic path 12 and the fluidic path 120''. In detail, the fluidic paths 12 and 120'' are fluidically connected together by means of the fluidic paths 1200'' and 1201".

Specifically, each heat exchange portion 1500'' comprises multiple passages 5000'', which each fluidically connect the inlet to the outlet for the fluid of the corresponding fluidic path 1200", 1201''. More specifically, each passage 5000'' defines a cavity inside of which the fluid flows; the surfaces that define each passage 5000'', in addition, are impinged on the outside by the air flow. In detail, the passages 5000'' define with one another a plurality of interstices 5200'' adapted to enable the passage of the air flow.

In the embodiment illustrated in Figures 7 and 7A, the interstices 5200'' are at least partially directed parallel to the direction X.

The air flow is due to the relative motion between the vehicle 1'' and the atmospheric air in which it is immersed and is adapted to remove heat from the fluid that crosses the heat exchange portions 1200'', 1201''. As a result of this heat exchange, the spars 92'', 93'' act as heat exchangers.

Specifically, the spars 92'', 93'' form, together with the crossbeam 90'' and the structure 10, a heat exchanger of the HVAC system 60; the fluid that crosses the fluidic paths 12, 120'', 1200'' and 1201'' is the same fluid that crosses the other components of the HVAC system 60 and the fluidic paths 12, 120'', 1200'' and 1201'' are part of the pipes 64. More specifically, the spars 92'', 93'', the crossbeam 90'', and the structure 10 constitute a condenser of the HVAC system 60. For example, the crossbeam 90'', the spars 92'', 93'', and the structure 10 are arranged in series or in parallel in the HVAC system 60.

The heat exchange portions 1500'' comprise a lattice structure 5100'' comprising structural elements (for example, truss elements) repeated and defining the passages 5000'' for the fluid and the interstices 5200'' between the above-mentioned passages 5000". Specifically, the interstices 5200'' are formed between the external surfaces of the passages 5000". More specifically, the interstices 5200'' of the spar 92'' are adapted to enable the passage of air flow from the face 92d'' to the face 92c''; the interstices 5200'' of the spar 93'' are adapted to enable the passage of the air flow from the face 93d'' to the face 93c".

The lattice structure 5100'' of the spar 92" preferably extends parallel to the direction X between the faces 92c'' and 92d''; the lattice structure 5100" of the spar 93'' extends parallel to the direction X between the faces 93c'' and 93d''.

The lattice structures 5100'' could comprise, in addition, one or more surfaces with fins.

In detail, the lattice structures 5100'' are made using additive manufacturing, for example using selective laser melting of metal powders.

The passages 5000'' comprise heat exchange surfaces between the fluid and the air in the form of gyroids. In addition, the fluid inside the passages 5000'' is fluidically insulated from the air.

In addition, the spars 92'', 93'' are preferably made of aluminium alloy.

The operation of the frame assembly 100'' is similar to the operation of the frame assembly 100' and is described below only as far as it differs from the latter.

In use, when the HVAC system 60 is activated, the fluid circulates through the components of the system, undergoing a refrigeration cycle. Specifically, when the fluid reaches the structure 10, part of the fluid crosses the fluidic path 12 and part of the fluid flows towards the fluidic path 120''. More specifically, the fluid reaches the inlet for the fluid of the fluidic path 120'' through the fluidic path 1200'', crosses the heat exchange portion 150', passes through the outlet for the fluid of the fluidic path 120'' then runs along the fluidic path 1201'' towards the structure 10.

At the same time, an air flow hits at least part of the heat exchange portion 1500'' of the fluidic path 1200'' in the direction oriented by the face 92d'' to the face 92c'' and/or at least part of the heat exchange portion 1500'' of the fluidic path 1201'' in the direction oriented by the face 93d'' to the face 93c''. In particular, this air flow flows through the interstices 5200'' of the lattice structures 5100''.

More specifically, when crossing the heat exchange portions 1500'', the fluid flows through the passages 5000'' and part of its heat is absorbed by the air flow hitting it.

From the above, the advantages of the structure 10, of the frame assembly 100; 100'; 100'', and of the motor vehicle 1; 1'; 1'' according to the invention are clear.

In particular, since the structure 10 comprises the main body 11, to which the suspensions of the motor vehicle 1; 1'; 1'' are fixed and the fluidic path 12, at which the cooling fluid exchanges heat with the incident air flow, the structure 10 performs a structural function and a heat exchanger function at the same time. As a result, it is possible to reduce the number of components needed to implement the thermodynamic cycle of the HVAC cycle 60 and, thus, the weight of the motor vehicle 1; 1'; 1'', ensuring, at the same time, the occupants' comfort.

Since the main body 11 comprises the compartment 20 and the openings 21 and the heat exchange portion 15 faces the compartment 20 or defines the compartment 20, the air flow is guided towards the heat exchange portion 15 efficiently. The orientation of the surface 27 additionally contributes to orienting the air flow entering the heat exchange portion 15 to encourage heat exchange with the fluid that flows in the fluidic path 12.

Since the crossbeam 90' comprises the fluidic path 120', which is fluidically connected to the fluidic path 12, at which the cooling fluid exchanges heat with the incident air flow, the crossbeam 90' performs, at the same time, a structural function and a heat exchanger function. As a result, it is possible to additionally reduce the number of components needed to implement the thermodynamic cycle of the HVAC system 60 and, thus, the weight of the motor vehicle 1', ensuring, at the same time, the occupants' comfort.

The above is even more true for the vehicle 1'', wherein the spars 92'' and 93'' comprise corresponding fluidic paths 1200'', 1201'', which also contribute to the heat exchange.

Since structure 10 comprises the thermal insulation means 900, heat transfer between heat exchange portion 15 and main body 11 may be limited. As a result, undesired heat transfer between heat exchange portion 15 and the rest of motor vehicle 1 is limited and in particular, towards frame 2 to which structure 10 is fixed. As a matter of fact, the transfer of heat to the frame of the vehicle is generally undesirable during hot weather, due to the temperature rise it may bring about inside the passenger compartment of the motor vehicle.

Finally, it is clear that changes may be made to the structure 10, the frame assembly 100; 100'; 100'', and the motor vehicle 1; 1'; 1'' according to the invention, and variations produced thereto, that, in any case, do not depart from the scope of protection defined by the claims.

In particular, the number and shape of the components described and illustrated could be different to and, in particular, varied with great freedom.

The HVAC system 60 could comprise additional components instead of or in addition to those illustrated in Figure 1 and described above. For example, the HVAC system 60 could comprise one or more ventilators, valves, turbines, and/or heat exchangers. Alternatively, the fluid could be water and the structure 10 and/or the crossbeam 90' and/or the crossbeam 90'' and/or the spars 92'', 93'' could act as a radiator for the motor vehicle 1.

The frame assembly 100; 100'; 100'' could be a front frame assembly, namely arranged at the front portion 1a. In particular, the structure 10 could be placed between the front wheels 3 along the direction Y.

The frame assembly 100; 100', 100'' may not comprise the strut 7. According to this embodiment not illustrated, the end 92a; 92a'; 92a'' of the spar 92; 92'; 92'' is fixed to the structure 10 and the end 92b; 92b'; 92b'' is fixed to the crossbeam 90; 90'; 90''. Similarly, the end 93a; 93a'; 93a'' of the spar 93; 93'; 93'' is fixed to the structure 10 and the end 93b; 93b'; 93b'' is fixed to the crossbeam 90; 90'; 90''.

The frame assembly 100 could comprise more than one spar 92 and/or more than one spar 93; the frame assembly 100' could comprise more than one spar 92' and/or more than one spar 93'; the frame assembly 100'' could comprise more than one spar 92'' and/or more than one spar 93''.

The frame assembly could comprise a spar 92 and a spar 93' and/or a spar 93'' or could comprise a spar 93 and a spar 92' and/or a spar 92''.

Frame assembly 100'; 100'' may comprise further thermal insulation means, preferably made in the same material of thermal insulation means 900, and adapted to limit heat transfer between at least one of the following groups of components:
- crossbeam 90'; 90'' and main body 11;
- crossbeam 90'; 90'' and strut 7;
- crossbeam 90'; 90'' and spars 92', 93'; 92'', 93'';
- crossbeam 90'; 90'' and the rest of frame 2;
- spars 92', 93'; 92'', 93" and main body 11;
- spars 92', 93'; 92'', 93" and strut 7;
- spars 92', 93'; 92'', 93'' and the rest of frame 2.

## Claims

1. A suspension attachment structure (10) for a motor vehicle (1; 1'; 1'') comprising:
- a main body (11) adapted to be fixed to a frame (2) of said motor vehicle (1; 1'; 1'') and adapted to support one or more suspensions of said motor vehicle (1; 1'; 1''); and
- a first fluidic path (12) adapted to be crossed, in use, internally by a fluid;
said first fluidic path (12) comprising, in turn:
- a first opening (13) for the inlet of said fluid;
- a second opening (14) for the outlet of said fluid;
- a first heat exchange portion (15) fluidly interposed between said first opening (13) and said second opening (14) and supported by and/or integrated with said main body (11);
said first heat exchange portion (15) being adapted to be hit, in use, by an air flow;
**characterized in that** said main body (11) comprises:
- a compartment (20) adapted to house at least partially one or more components of said motor vehicle (1; 1'; 1'');
- at least a third opening (21) adapted to allow, in use, said air flow into said compartment (20);
said first heat exchange portion (15) facing said compartment (20) and/or defining said compartment (20).

2. The structure according to claim 1, wherein said main body (11) comprises:
- a first wall (22), at which said structure (10) is adapted to be fixed to said frame (2);
- a second wall (23) opposite to said first wall (22) along a first direction (X);
- third lateral walls (24, 25) extending between said first wall (22) and said second wall (23) along said first direction (X);
said first heat exchange portion (15) being arranged at said second wall (23); said at least a third opening (21) being arranged at a respective said lateral wall (24, 25).

3. The structure according to claim 2, wherein each said third opening (21) comprises a surface (27) extending transversally to said first direction (X) and adapted to guide, in use, said air flow towards said first heat exchange portion (15).

4. The structure according to claim 2 or 3, wherein said main body (11) has a tapered shape proceeding from said first wall (22) towards said second wall (23) parallel to said first direction (X).

5. The structure according to any one of claims 2 to 4, wherein each said third lateral wall (24, 25) comprises:
- a first region (40), which is planar and extending along said first direction (X) between the respective said third opening (21) and said second wall (23); and
- a second region (41) extending along said first direction (X) between said first wall (22) and said respective third opening (21) and joining said first wall (22) to said first region (40);
each said second region (41) being adapted to guide said air flow through said respective third opening (21).

6. The structure according to any one of the preceding claims, wherein said first heat exchange portion (15) comprises a plurality of first passages (50) each fluidly connected to said first opening (13) and said second opening (14) and adapted to be crossed, in use, by said fluid.

7. The structure according to claim 6, wherein said first heat exchange portion (15) comprises a first lattice structure (51) comprising said first passages (50) and defining a plurality of first interstices (52) adapted to be crossed, in use, by said air flow.

8. The structure according to claim 7, wherein said first lattice structure (51) is made by additive manufacturing.

9. The structure according to any one of the preceding claims, comprising thermal insulation means (900) adapted to limit heat transfer between said first heat exchange portion (15) and said main body (110).

10. The structure according to claim 9, wherein said thermal insulation means (900) are integrated into said main body (11) or in contact with said main body (11).

11. A frame assembly for a motor vehicle (1; 1'; 1'') comprising:
- at least one structure (10) according to any one of the preceding claims, adapted to be fixed to a frame (2) of said motor vehicle (1; 1'; 1");
- at least one crossbeam (90; 90'; 90'') extending transversally to a first direction (X);
- at least one spar (92, 93; 92', 93'; 92'', 93'') extending between said structure (10) and said crossbeam (90; 90'; 90'') parallel to said first direction (X).

12. The frame assembly according to claim 11, wherein said crossbeam (90'; 90'') comprises a second fluidic path (120'; 120'') fluidly connected to said first fluidic path (12);
said second fluidic path (120'; 120'') comprising in turn:
- a first inlet for said fluid;
- a first outlet for said fluid;
- a second heat exchange portion (150'; 150'') fluidly interposed between said first inlet and said first outlet;
said second heat exchange portion (150'; 150'') being adapted to be hit, in use, by an air flow.

13. The frame assembly according to claim 12, wherein said second heat exchange portion (150'; 150'') comprises a plurality of second passages (500', 500''), each fluidly connected to said first inlet and said first outlet and adapted to be crossed, in use, by said fluid.

14. The frame assembly according to claim 13, wherein said second heat exchange portion (150'; 150'') comprises a second lattice structure (510') comprising said second passages (500') and defining a plurality of second interstices (520') adapted to be crossed, in use, by said air flow.

15. The frame assembly according to any one of claims 12 to 14, wherein said at least one spar (92', 93') comprises at least one duct (94, 95') adapted to fluidly connect said second fluidic path (120') to said first fluidic path (12).

16. The frame assembly according to any one of claims 12 to 14, wherein said at least one spar (92''; 93") comprises a third fluidic path (1200'', 1201'') fluidly connected to said first fluidic path (12) and said second fluidic path (120'');
said third fluidic path (1200'', 1201'') comprising in turn:
- a second inlet for said fluid;
- a second outlet for said fluid;
- a third heat exchange portion (1500'') fluidly interposed between said second inlet and said second outlet;
said third heat exchange portion (1500'') being adapted to be hit, in use, by an air flow.

17. The frame assembly according to claim 16, wherein said third heat exchange portion (1500'') comprises a plurality of third passages (5000''), each fluidly connected to said second inlet and said second outlet and adapted to be crossed, in use, by said fluid.

18. The frame assembly according to claim 17, wherein said third heat exchange portion (1500'') comprises a third lattice structure (5100'') comprising said third passages (5000'') and defining a plurality of third interstices (5200'') adapted to be crossed, in use, by said air flow.

19. The frame assembly according to any one of claims 11 to 18, comprising a strut (7) adapted to absorb the shocks of said motor vehicle (1; 1'; 1'') directed parallel to said first direction (X);
said at least one spar (92, 93; 92', 93'; 92", 93'') being fixed to said strut (7) and to said crossbeam (90; 90'; 90'').

20. A motor vehicle (1; 1'; 1'') comprising:
- a frame (2),
- a plurality of wheels (3, 4) rotatable about respective rotational axes to move, in use, said frame (2) with respect to the ground;
- a plurality of suspensions adapted to couple said wheels (3) to said frame (2) at variable relative distances along a second direction (Z) vertical, in use; and
- a structure (10) according to any one of claims 1 to 10, adapted to be fixed to said frame (2) and to which at least one of said suspensions is attached.

21. The motor vehicle according to claim 20, wherein said frame (2) comprises two bodies (5) adapted to guide, in use, said air flow towards said structure (10); said bodies (5) extending each parallel to a third direction (B) and a fourth direction (C), respectively; said third direction (B) and said fourth direction (C) being mutually incident and transversal to said first direction (X); said structure (10) being fixed to said bodies (5).

22. The motor vehicle according to claim 20 or 21, further comprising a system (60) for ventilation, heating and/or conditioning; said structure (10) being a heat exchanger of said system (60).

23. The motor vehicle according to any one of claims 20 to 22, further comprising a frame assembly (100; 100'; 100'') according to any one of claims 11 to 19; said frame assembly (100; 100'; 100'') comprising said structure (10).

24. The motor vehicle according to claims 22 and 23 wherein, when it comprises the frame assembly (100') according to any one of claims 12 to 15 or 19, said crossbeam (90') defines a heat exchanger of said system (60), together with said structure (10); and/or
wherein, when it comprises the frame assembly (100''= according to any one of claims 16 to 19, said crossbeam (90'') and said at least one spar (92'', 93'') define a heat exchanger of said structure (60), together with said structure (10).

## Patentansprüche

1. Aufhängungsbefestigungsstruktur (10) für ein Kraftfahrzeug (1; 1'; 1"), umfassend:
- einen Hauptkörper (11), der dazu ausgelegt ist, an einem Rahmen (2) des Kraftfahrzeugs (1; 1'; 1'') befestigt zu werden und eine oder mehrere Aufhängungen des Kraftfahrzeugs (1; 1'; 1'') zu tragen; und
- einen ersten fluidischen Pfad (12), der so ausgelegt ist, dass er im Betrieb im Inneren von einem Fluid durchströmt wird;
wobei der erste fluidische Pfad(12) seinerseits umfasst:
- eine erste Öffnung (13) für den Einlass des Fluids;
- eine zweite Öffnung (14) für den Auslass des Fluids;
- einen ersten Wärmeaustauschabschnitt (15), der fluidisch zwischen der ersten Öffnung (13) und der zweiten Öffnung (14) angeordnet ist und vom Hauptkörper (11) getragen wird und/oder mit diesem einstückig ausgebildet ist;
wobei der erste Wärmeaustauschabschnitt (15) so ausgelegt ist, dass er im Betrieb von einem Luftstrom angeströmt wird;
**dadurch gekennzeichnet, dass** der Hauptkörper (11) Folgendes umfasst:
- ein Fach (20), das dazu ausgelegt ist, mindestens teilweise eine oder mehrere Komponenten des Kraftfahrzeugs (1; 1'; 1'') aufzunehmen;
- mindestens eine dritte Öffnung (21), die so ausgelegt ist, dass sie im Betrieb den Luftstrom in das Fach (20) hinein ermöglicht;
wobei der erste Wärmeaustauschabschnitt (15) dem Fach (20) zugewandt ist und/oder das Fach (20) bildet.

2. Struktur nach Anspruch 1, wobei der Hauptkörper (11) Folgendes umfasst:
- eine erste Wand (22), an der die Struktur (10) am Rahmen (2) befestigt zu werden ausgelegt ist;
- eine zweite Wand (23), die der ersten Wand (22) entlang einer ersten Richtung (X) gegenüberliegt;
- dritte Seitenwände (24, 25), die sich zwischen der ersten Wand (22) und der zweiten Wand (23) entlang der ersten Richtung (X) erstrecken;
wobei der erste Wärmeaustauschabschnitt (15) an der zweiten Wand (23) angeordnet ist; wobei die mindestens eine dritte Öffnung (21) an einer jeweiligen Seitenwand (24, 25) angeordnet ist.

3. Struktur nach Anspruch 2, wobei jede der dritten Öffnungen (21) eine Fläche (27) umfasst, die sich quer zur ersten Richtung (X) erstreckt und so ausgelegt ist, dass sie im Betrieb den Luftstrom zum ersten Wärmeaustauschabschnitt (15) leitet.

4. Struktur gemäß Anspruch 2 oder 3, wobei der Hauptkörper (11) eine sich von der ersten Wand (22) in Richtung der zweiten Wand (23) parallel zur ersten Richtung (X) verjüngende Form aufweist.

5. Struktur nach einem der Ansprüche 2 bis 4, wobei jede der dritten Seitenwände (24, 25) Folgendes umfasst:
- einen ersten Bereich (40), der eben ist und sich entlang der ersten Richtung (X) zwischen der jeweiligen dritten Öffnung (21) und der zweiten Wand (23) erstreckt; und
- einen zweiten Bereich (41), der sich entlang der ersten Richtung (X) zwischen der ersten Wand (22) und der jeweiligen dritten Öffnung (21) erstreckt und die erste Wand (22) mit dem ersten Bereich (40) verbindet;
wobei jeder dieser zweiten Bereiche (41) dazu ausgelegt ist, den Luftstrom durch die jeweilige dritte Öffnung (21) zu leiten.

6. Struktur nach einem der vorstehenden Ansprüche, wobei der erste Wärmeaustauschabschnitt (15) eine Vielzahl von ersten Durchgängen (50) umfasst, die jeweils mit der ersten Öffnung (13) und der zweiten Öffnung (14) fluidverbunden sind und so ausgelegt sind, dass sie im Betrieb von dem Fluid durchströmt werden können.

7. Struktur nach Anspruch 6, wobei der erste Wärmeaustauschabschnitt (15) eine erste Gitterstruktur (51) umfasst, die die ersten Durchgänge (50) umfasst und eine Vielzahl von ersten Zwischenräumen (52) definiert, die so ausgelegt sind, dass sie im Betrieb von dem Luftstrom durchströmt werden.

8. Struktur nach Anspruch 7, wobei die erste Gitterstruktur (51) mittels additiver Fertigung hergestellt ist.

9. Struktur nach einem der vorstehenden Ansprüche, umfassend Wärmeisoliermittel (900), die dazu ausgelegt sind, die Wärmeübertragung zwischen dem ersten Wärmeaustauschabschnitt (15) und dem Hauptkörper (110) zu begrenzen.

10. Struktur nach Anspruch 9, wobei die Wärmeisoliermittel (900) in den Hauptkörper (11) integriert sind oder mit dem Hauptkörper (11) in Kontakt stehen.

11. Rahmenanordnung für ein Kraftfahrzeug (1; 1'; 1''), umfassend:
- mindestens eine Struktur (10) nach einem der vorstehenden Ansprüche, die dazu ausgelegt ist, an einem Rahmen (2) des Kraftfahrzeugs (1; 1'; 1") befestigt zu werden;
- mindestens einen Querträger (90; 90'; 90''), der sich quer zu einer ersten Richtung (X) erstreckt;
- mindestens einen Holm (92, 93; 92', 93'; 92'', 93''), der sich zwischen der Struktur (10) und dem Querträger (90; 90'; 90'') parallel zur ersten Richtung (X) erstreckt.

12. Rahmenanordnung nach Anspruch 11, wobei der Querträger (90'; 90'') einen zweiten fluidischen Pfad (120'; 120'') umfasst, der mit dem ersten fluidischen Pfad (12) fluidverbunden ist;
wobei der zweite fluidische Pfad (120'; 120'') seinerseits umfasst:
- einen ersten Einlass für das Fluid;
- einen ersten Auslass für das Fluid;
- einen zweiten Wärmeaustauschabschnitt (150'; 150''), der fluidisch zwischen dem ersten Einlass und dem ersten Auslass angeordnet ist;
wobei der zweite Wärmeaustauschabschnitt (150'; 150'') so ausgelegt ist, dass er im Betrieb von einem Luftstrom angeströmt wird.

13. Rahmenanordnung nach Anspruch 12, wobei der zweite Wärmeaustauschabschnitt (150'; 150'') eine Vielzahl von zweiten Durchgängen (500', 500'') umfasst, die jeweils mit dem ersten Einlass und dem ersten Auslass fluidverbunden sind und so ausgelegt sind, dass sie im Betrieb von dem Fluid durchströmt werden.

14. Rahmenanordnung nach Anspruch 13, wobei der zweite Wärmeaustauschabschnitt (150'; 150'') eine zweite Gitterstruktur (510') umfasst, die die zweiten Durchgänge (500') umfasst und eine Vielzahl von zweiten Zwischenräumen (520') definiert, die so ausgelegt sind, dass sie im Betrieb von dem Luftstrom durchströmt werden.

15. Rahmenanordnung nach einem der Ansprüche 12 bis 14, wobei der mindestens eine Holm (92', 93') mindestens einen Kanal (94, 95') umfasst, der dazu ausgelegt ist, den zweiten fluidischen Pfad (120') mit dem ersten fluidischen Pfad (12) fluidzuverbinden.

16. Rahmenanordnung nach einem der Ansprüche 12 bis 14, wobei der mindestens eine Holm (92''; 93'') einen dritten fluidischen Pfad (1200'', 1201'') umfasst, der mit dem ersten fluidischen Pfad (12) und dem zweiten fluidischen Pfad (120'') fluidverbunden ist;
wobei der dritte fluidische Pfad (1200'', 1201'') seinerseits umfasst:
- einen zweiten Einlass für das Fluid;
- einen zweiten Auslass für das Fluid;
- einen dritten Wärmeaustauschabschnitt (1500"), der fluidisch zwischen dem zweiten Einlass und dem zweiten Auslass angeordnet ist;
wobei der dritte Wärmeaustauschabschnitt (1500") so ausgelegt ist, dass er im Betrieb von einem Luftstrom angeströmt wird.

17. Rahmenanordnung nach Anspruch 16, wobei der dritte Wärmeaustauschabschnitt (1500'') eine Vielzahl von dritten Durchgängen (5000'') umfasst, die jeweils mit dem zweiten Einlass und dem zweiten Auslass fluidverbunden sind und so ausgelegt sind, dass sie im Betrieb von dem Fluid durchströmt werden.

18. Rahmenanordnung gemäß Anspruch 17, wobei der dritte Wärmeaustauschabschnitt (1500'') eine dritte Gitterstruktur (5100'') umfasst, die die dritten Durchgänge (5000'') umfasst und eine Vielzahl von dritten Zwischenräumen (5200'') definiert, die so ausgelegt sind, dass sie im Betrieb von dem Luftstrom durchströmt werden.

19. Rahmenanordnung nach einem der Ansprüche 11 bis 18, umfassend eine Strebe (7), die dazu ausgelegt ist, die parallel zu der ersten Richtung (X) gerichteten Stöße des Kraftfahrzeugs (1; 1'; 1'') zu dämpfen;
wobei mindestens ein Holm (92, 93; 92', 93'; 92'', 93'') an der Strebe (7) und an dem Querträger (90; 90'; 90") befestigt ist.

20. Kraftfahrzeug (1; 1'; 1''), umfassend:
- einen Rahmen (2),
- eine Vielzahl von Rädern (3, 4), die um ihre jeweiligen Drehachsen drehbar sind, um im Betrieb den Rahmen (2) in Bezug auf den Boden zu bewegen;
- eine Vielzahl von Aufhängungen, die dazu ausgelegt sind, die Räder (3) im Betrieb in variablen relativen Abständen entlang einer zweiten, vertikalen Richtung (Z) mit dem Rahmen (2) zu koppeln; und
- eine Struktur (10) nach einem der Ansprüche 1 bis 10, die zur Befestigung an dem Rahmen (2) ausgelegt ist und an der mindestens eine der Aufhängungen befestigt ist.

21. Kraftfahrzeug nach Anspruch 20, wobei der Rahmen (2) zwei Körper (5) umfasst, die so ausgelegt sind, dass sie im Betrieb den Luftstrom in Richtung der Struktur (10) leiten; wobei sich die Körper (5) jeweils parallel zu einer dritten Richtung (B) bzw. einer vierten Richtung (C) erstrecken; wobei die dritte Richtung (B) und die vierte Richtung (C) zueinander senkrecht stehen und quer zur ersten Richtung (X) verlaufen; wobei die Struktur (10) an den Körpern (5) befestigt ist.

22. Kraftfahrzeug nach Anspruch 20 oder 21, ferner umfassend ein System (60) zur Belüftung, Heizung und/oder Klimatisierung, wobei die Struktur (10) ein Wärmetauscher des Systems (60) ist.

23. Kraftfahrzeug nach einem der Ansprüche 20 bis 22, ferner umfassend eine Rahmenanordnung (100; 100'; 100'') nach einem der Ansprüche 11 bis 19; wobei die Rahmenanordnung (100; 100'; 100'') die Struktur (10) umfasst.

24. Kraftfahrzeug nach den Ansprüchen 22 und 23, wobei, wenn es die Rahmenanordnung (100') nach einem der Ansprüche 12 bis 15 oder 19 umfasst, der Querträger (90') zusammen mit der Struktur (10) einen Wärmetauscher des Systems (60) bildet; und/oder
wobei, wenn es die Rahmenanordnung (100' ') nach einem der Ansprüche 16 bis 19 umfasst, der Querträger (90'') und der mindestens eine Holm (92'', 93'') zusammen mit der Struktur (10) einen Wärmetauscher der Struktur (60) bilden.

## Revendications

1. Structure de fixation de suspension (10) pour un véhicule automobile (1 ; 1' ; 1"), comprenant :
- un corps principal (11) adapté pour être fixé à un châssis (2) dudit véhicule automobile (1 ; 1' ; 1'') et adapté pour supporter une ou plusieurs suspensions dudit véhicule automobile (1 ; 1' ; 1") ; et
- un premier chemin fluidique (12) adapté pour être traversé, en cours d'utilisation, par un fluide ;
ledit premier chemin fluidique (12) comprenant, à son tour :
- une première ouverture (13) destinée à l'entrée dudit fluide ;
- une deuxième ouverture (14) destinée à la sortie dudit fluide ;
- une première partie d'échange thermique (15) intercalée, de manière fluidique, entre ladite première ouverture (13) et ladite deuxième ouverture (14) et supportée par ledit corps principal (11) et/ou intégrée à celui-ci ;
ladite première partie d'échange thermique (15) étant adaptée pour être balayée, en cours d'utilisation, par un flux d'air ;
**caractérisée en ce que** ledit corps principal (11) comprend :
- un compartiment (20) adapté pour loger, au moins partiellement, un ou plusieurs composants dudit véhicule automobile (1 ; 1' ; 1") ;
- au moins une troisième ouverture (21) adaptée pour permettre, en cours d'utilisation, l'entrée dudit flux d'air dans ledit compartiment (20) ;
ladite première partie d'échange thermique (15) faisant face audit compartiment (20) et/ou définissant ledit compartiment (20).

2. Structure selon la revendication 1, dans laquelle ledit corps principal (11) comprend :
- une première paroi (22), au niveau de laquelle ladite structure (10) est adaptée pour être fixée audit châssis (2) ;
- une deuxième paroi (23) opposée à ladite première paroi (22) suivant une première direction (X) ;
- des troisièmes parois latérales (24, 25) s'étendant entre ladite première paroi (22) et ladite deuxième paroi (23) suivant ladite première direction (X) ;
ladite première partie d'échange thermique (15) étant disposée au niveau de ladite deuxième paroi (23) ; ladite au moins troisième ouverture (21) étant disposée au niveau d'une dite paroi latérale respective (24, 25).

3. Structure selon la revendication 2, dans laquelle chaque dite troisième ouverture (21) comprend une surface (27) s'étendant transversalement à ladite première direction (X) et adaptée pour guider, en cours d'utilisation, ledit flux d'air vers ladite première partie d'échange thermique (15).

4. Structure selon la revendication 2 ou 3, dans laquelle ledit corps principal (11) présente une forme conique s'étendant de ladite première paroi (22) vers ladite deuxième paroi (23) parallèlement à ladite première direction (X).

5. Structure selon l'une quelconque des revendications 2 à 4, dans laquelle chaque dite troisième paroi latérales (24, 25) comprend :
- une première zone (40), qui est plane et s'étend suivant ladite première direction (X) entre ladite troisième ouverture respective (21) et ladite deuxième paroi (23) ; et
- une deuxième zone (41) s'étendant suivant ladite première direction (X) entre ladite première paroi (22) et ladite troisième ouverture respective (21) et reliant ladite première paroi (22) à ladite première zone (40) ;
chaque dite deuxième zone (41) étant adaptée pour guider ledit flux d'air à travers ladite troisième ouverture (21) respective.

6. Structure selon l'une quelconque des revendications précédentes, dans laquelle ladite première partie d'échange thermique (15) comprend une pluralité de premiers passages (50) reliés chacun de manière fluidique à ladite première ouverture (13) et à ladite deuxième ouverture (14) et adaptés pour être traversés, en cours d'utilisation, par ledit fluide.

7. Structure selon la revendication 6, dans laquelle ladite première partie d'échange thermique (15) comprend une première structure en treillis (51) comportant lesdits premiers passages (50) et définissant une pluralité de premiers interstices (52) adaptés pour être traversés, en cours d'utilisation, par ledit flux d'air.

8. Structure selon la revendication 7, dans laquelle ladite première structure en treillis (51) est réalisée par fabrication additive.

9. Structure selon l'une quelconque des revendications précédentes, comprenant des moyens d'isolation thermique (900) adaptés pour limiter le transfert de chaleur entre ladite première partie d'échange thermique (15) et ledit corps principal (110).

10. Structure selon la revendication 9, dans laquelle lesdits moyens d'isolation thermique (900) sont intégrés dans ledit corps principal (11) ou en contact avec ledit corps principal (11).

11. Ensemble de châssis pour un véhicule automobile (1 ; 1' ; 1") comprenant :
- au moins une structure (10) selon l'une quelconque des revendications précédentes, adaptée pour être fixée à un châssis (2) dudit véhicule automobile (1 ; 1' ; 1") ;
- au moins une traverse (90 ; 90' ; 90'') s'étendant transversalement à une première direction (X) ;
- au moins un longeron (92, 93 ; 92', 93' ; 92", 93'') s'étendant entre ladite structure (10) et ladite traverse (90 ; 90' ; 90") parallèlement à ladite première direction (X).

12. Ensemble de châssis selon la revendication 11, dans lequel ladite traverse (90' ; 90'') comprend un deuxième chemin fluidique (120' ; 120") relié de manière fluidique audit premier chemin fluidique (12) ;
ledit deuxième chemin fluidique (120' ; 120") comprenant, à son tour :
- une première entrée pour ledit fluide ;
- une première sortie pour ledit fluide ;
- une deuxième partie d'échange thermique (150' ; 150") intercalée, de manière fluidique, entre ladite première entrée et ladite première sortie ;
ladite deuxième partie d'échange thermique (150' ; 150") étant adaptée pour être balayée, en cours d'utilisation, par un flux d'air.

13. Ensemble de châssis selon la revendication 12, dans lequel ladite deuxième partie d'échange thermique (150' ; 150") comprend une pluralité de seconds passages (500', 500''), chacun étant relié de manière fluidique à ladite première entrée et à ladite première sortie et adapté pour être traversé, en cours d'utilisation, par ledit fluide.

14. Ensemble de châssis selon la revendication 13, dans lequel ladite deuxième partie d'échange thermique (150' ; 150'') comprend une deuxième structure en treillis (510') comprenant lesdits deuxièmes passages (500') et définissant une pluralité de deuxièmes interstices (520') adaptés pour être traversés, en cours d'utilisation, par ledit flux d'air.

15. Ensemble de châssis selon l'une quelconque des revendications 12 à 14, dans lequel ledit au moins un longeron (92', 93') comprend au moins un conduit (94, 95') adapté pour relier de manière fluidique ledit deuxième chemin fluidique (120') audit premier chemin fluidique (12).

16. Ensemble de châssis selon l'une quelconque des revendications 12 à 14, dans lequel ledit au moins un longeron (92" ; 93'') comprend un troisième chemin fluidique (1200'', 1201'') relié de manière fluidique audit premier chemin fluidique (12) et audit deuxième chemin fluidique (120") ;
ledit troisième chemin fluidique (1200", 1201") comprenant, à son tour :
- une deuxième entrée pour ledit fluide ;
- une deuxième sortie pour ledit fluide ;
- une troisième section d'échange thermique (1500") intercalée de manière fluidique entre ladite deuxième entrée et ladite deuxième sortie ;
ladite troisième partie d'échange thermique (1500") étant adaptée pour être balayée, en cours d'utilisation, par un flux d'air.

17. Ensemble de châssis selon la revendication 16, dans lequel ladite troisième partie d'échange thermique (1500'') comprend une pluralité de troisièmes passages (5000"), chacun étant relié de manière fluidique à ladite deuxième entrée et à ladite deuxième sortie et adapté pour être traversé, en cours d'utilisation, par ledit fluide.

18. Ensemble de châssis selon la revendication 17, dans lequel ladite troisième partie d'échange thermique (1500'') comprend une troisième structure en treillis (5100") comprenant lesdits troisièmes passages (5000") et définissant une pluralité de troisièmes interstices (5200'') adaptés pour être traversés, en cours d'utilisation, par ledit flux d'air.

19. Ensemble de châssis selon l'une quelconque des revendications 11 à 18, comprenant une entretoise (7) adaptée pour absorber les chocs dudit véhicule automobile (1 ; 1' ; 1") dirigés parallèlement à ladite première direction (X) ;
ledit au moins un longeron (92, 93 ; 92', 93' ; 92", 93") étant fixé à ladite entretoise (7) et à ladite traverse (90 ; 90' ; 90").

20. Véhicule à moteur (1 ; 1' ; 1") comprenant :
- un châssis (2) ;
- une pluralité de roues (3, 4) pouvant tourner autour d'axes de rotation respectifs afin de déplacer, en cours d'utilisation, ledit châssis (2) par rapport au sol ;
- une pluralité de suspensions destinées à coupler lesdites roues (3) audit châssis (2) à des distances relatives variables suivant une deuxième direction (Z) verticale, en cours d'utilisation ; et
- une structure (10) selon l'une quelconque des revendications 1 à 10, adaptée pour être fixée audit châssis (2) et à laquelle est fixée au moins l'une desdites suspensions.

21. Véhicule automobile selon la revendication 20, dans lequel ledit châssis (2) comprend deux corps (5) adaptés pour guider, en cours d'utilisation, ledit flux d'air vers ladite structure (10) ; lesdits corps (5) s'étendant chacun parallèlement à une troisième direction (B) et à une quatrième direction (C), respectivement ; ladite troisième direction (B) et ladite quatrième direction (C) étant mutuellement perpendiculaires et transversales à ladite première direction (X) ; ladite structure (10) étant fixée auxdits corps (5).

22. Véhicule automobile selon la revendication 20 ou 21, comprenant en outre un système (60) de ventilation, de chauffage et/ou de climatisation ; ladite structure (10) étant un échangeur de chaleur dudit système (60).

23. Véhicule automobile selon l'une quelconque des revendications 20 à 22, comprenant en outre un ensemble de châssis (100 ; 100' ; 100") selon l'une quelconque des revendications 11 à 19 ; ledit ensemble de châssis (100 ; 100' ; 100'') comprenant ladite structure (10).

24. Véhicule automobile selon les revendications 22 et 23, dans lequel, lorsqu'il comprend l'ensemble de châssis (100') selon l'une quelconque des revendications 12 à 15 ou 19, ladite traverse (90') définit un échangeur de chaleur dudit système (60), conjointement avec ladite structure (10) ; et/ou
dans lequel, lorsqu'il comprend l'ensemble de châssis (100'') selon l'une quelconque des revendications 16 à 19, ladite traverse (90") et ledit au moins un longeron (92", 93'') définissent un échangeur de chaleur de ladite structure (60), conjointement avec ladite structure (10).
